# EUROPEAN PATENT SPECIFICATION

(11) **EP 2 593 199 B1**
(45) Date of publication and mention of the grant of the patent: **23.09.2015**
(21) Application number: 11736166.7
(22) Date of filing: 20.06.2011
(51) Int. Cl.: F28D 5/02, F28F 1/08, B01D 1/04, B01D 1/22, B01D 1/26, C02F 1/08, B01D 3/14, F28F 13/04

(54) **AN EVAPORATOR WITH COATED AND CORRUGATED TUBES**
VERDAMPFER MIT BESCHICHTETEN WELLROHREN
EVAPORATEUR COMPRENANT DES TUBES REVÊTUS ET ONDULÉS

(30) Priority: 17.03.2011 GB 201104465; 22.06.2010 IL 20654010
(43) Date of publication of application: 22.05.2013
(73) Proprietor: I.D.E. Technologies Ltd., 60920 Kadima (IL)
(72) Inventor: LEVY, Amnon, 47291 Ramat Hasharon (IL); WEINBERG, Joseph, 42408 Netanya (IL); ROJANSKIY, Henrikh, 30600 Or Akiva (IL)
(74) Representative: Virdee-Crofts, Kulwinder Kaur
(86) International application number: PCT/IB2011/052684
(87) International publication number: WO 2011/161613

(56) References cited:
- FR-A1- 2 591 504
- US-A1- 2007 240 446
- US-A1- 2010 089 560

## Description

### TECHNICAL FIELD

The present invention relates to the field of desalination, and more particularly, to evaporator tubes.

### DISCUSSION OF RELATED ART

Desalination of water is a process in which various soluble materials such as salt, contaminants, etc, are removed from water containing these materials, leaving clean, usually potable water. It is known that among most efficient thermal desalination processes currently in use are multi effect distillation (MED) and mechanical vapor compression desalination (MVC).

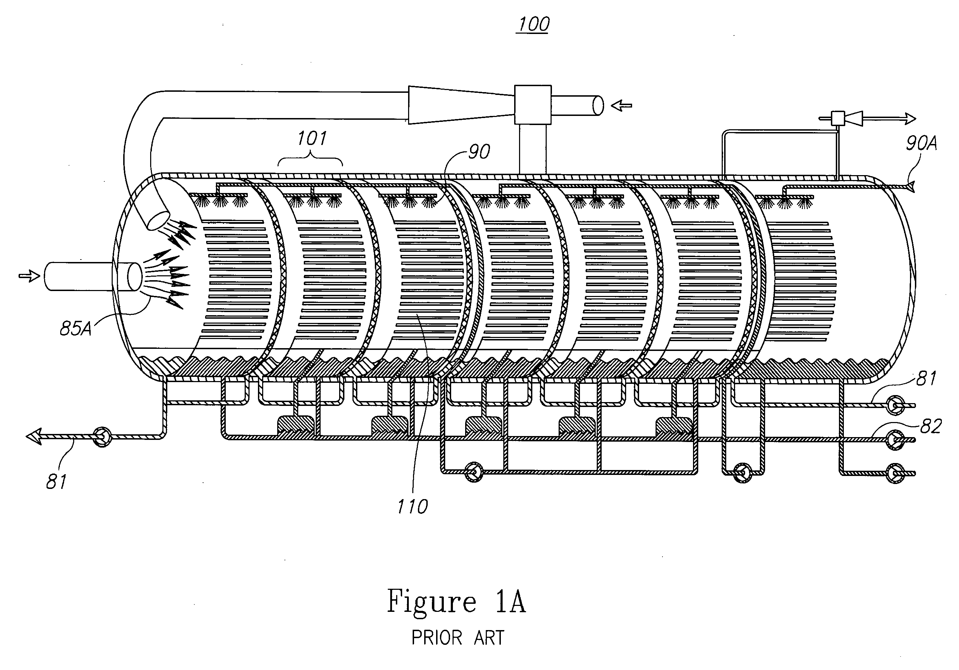

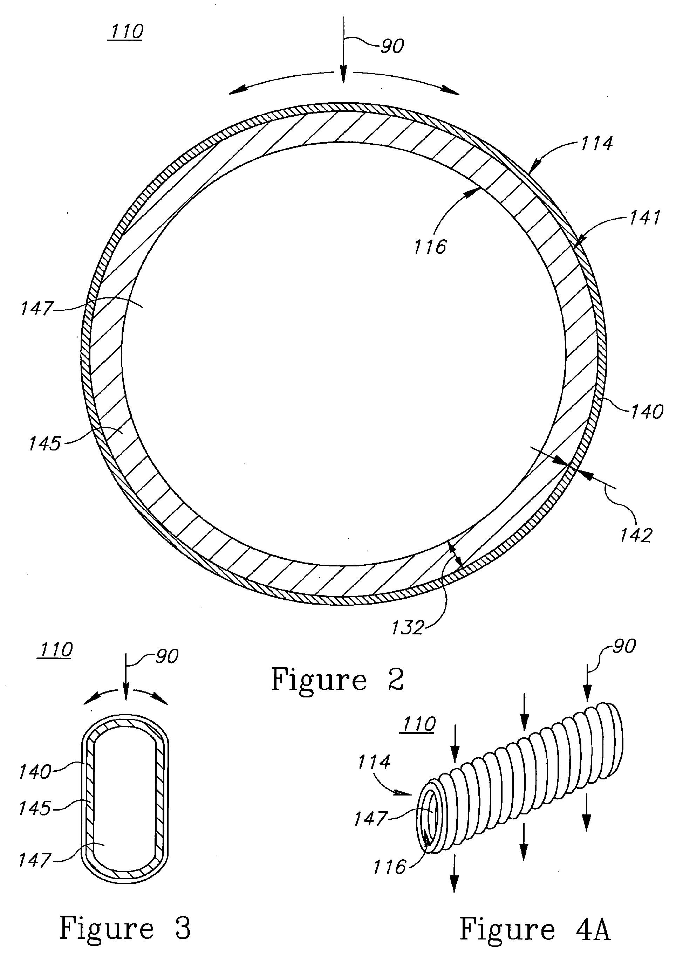

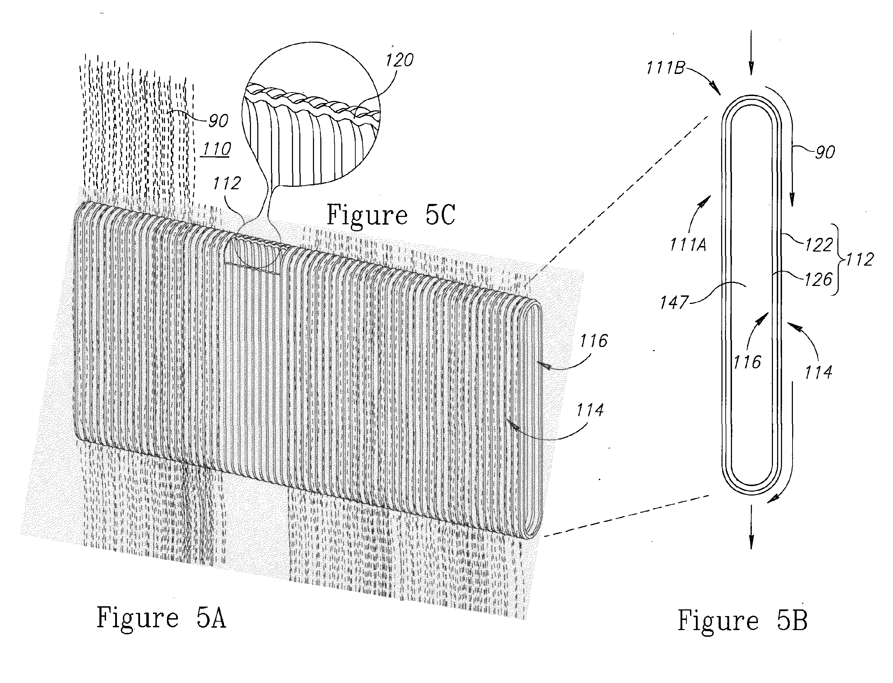

**Figure 1A** is a schematic illustration of a multi-effect evaporator **100** with round tubes **110**, according to the prior art, as disclosed, for example in European patent document No. 1858609. Existing Multi Effect Desalination plants have evaporators **100** made of aluminum alloy horizontal tubes **110**, falling-film evaporative condensers in a serial arrangement, to produce through repetitive steps of evaporation and condensation, each at a lower temperature and pressure, a multiple quantity of distillate from a given quantity of input vapor. Seawater **90A** entering each effect **101** is introduced as a thin falling film **90** onto outer surface **114** (see **Figure 5A**), which is supported externally by tubes **110**. Vapor **85A** flows internally through tubes **110** in inner space **147**, delimited by inner surface **116** (see **Figures 2** and **5B**). As vapor **85A** condenses, seawater **90A** from film **90** evaporates and the vapor is introduced into tubes **110** of next effect **101**. Condensate **81** is collected from tubes **110**, while brine **82** is collected from film **90** after flowing over all tubes **110**. Prior art tubes **110** are circular.

Any number of evaporative condensers (effects **101**) may be incorporated in the plants' heat recovery sections, depending on the temperature and costs of the available low grade heat and the optimal trade-off point between investment and vapor economy. Technically, the number of effects **101** is limited only by the temperature difference between the vapor **85A** and seawater **90A** inlet temperatures (defining the hot and cold ends of the unit) and the minimum temperature differential allowed on each effect **101**.

The incoming seawater **90A** is de-aerated and preheated in a heat rejection condenser and then divided into two streams. One is returned to the sea as coolant discharge, and the other becomes feed for the distillation process. Seawater **90A** is pretreated with a scale inhibitor and introduced into the lowest temperature group. The introduction to the lowest temperature group (backward feed flow) rather than to the highest is due to an effort to maintain the thermodynamic efficiency of the plant by reducing the irreversible mixing of the colder seawater feed with the hot effects temperature. Due to the falling film **90** nature of the feed flow over tubes **110** a pump is required to move the saline water from the bottom of the effect **101** to the top of the next one **101**.

Input vapor **85A** is fed into tubes **110** of the hottest effect. There it condenses, giving up its latent heat to the saline water flowing over the outer surface of tubes **110**, while condensation takes place on the inside of tube **110**, a nearly equal amount of evaporation occurs on the outside minus the amount required to preheat the seawater feed **90A** to the evaporation temperature. The evaporation-condensation process is repeated along the entire series of effects, each of which contributes an amount of additional distillate. The vapor from the last effect is condensed by seawater coolant in the heat rejection condenser.

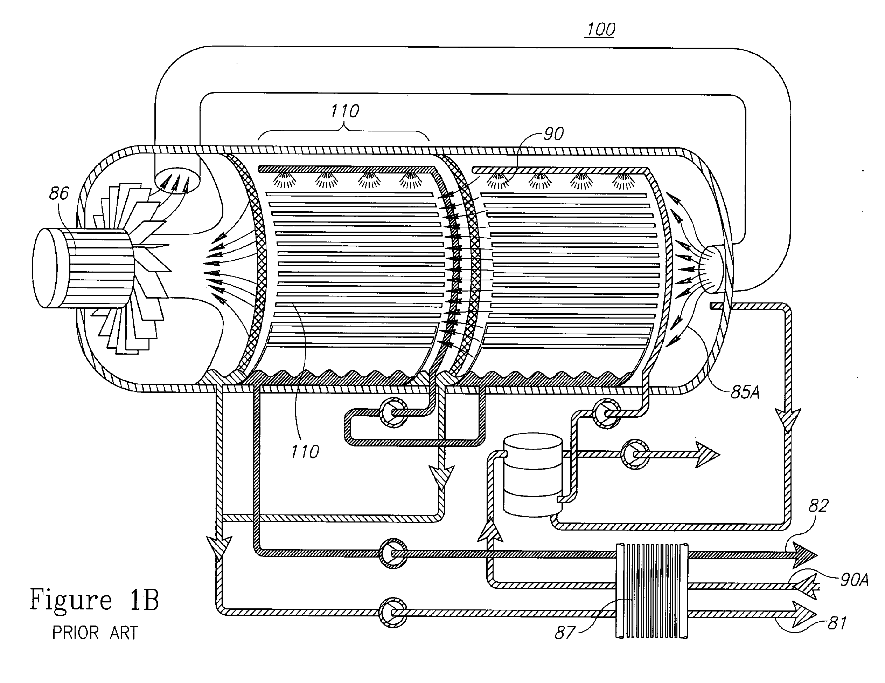

**Figure 1B** is a schematic illustration of a mechanical vapor compression desalination apparatus (MVC) with round tubes **110**, according to the prior art. MVC apparatus comprises an evaporator **100** receiving sea water feed **90A** that is pre-heated by exchanging heat with exiting product (condensate) **81** and brine **82** in a heat exchanger **87** and in a condenser **88**. Water **90** is consecutively introduced as a falling film upon tubes **110** one effect **101** after the other. In each effect **101** the falling film is produced by residual water from the former effect, while vapor **85A** from the former effect condenses within tubes **110**. Vapor is removed and compressed by a compressor **86** to be reintroduced into the first effect. Condensate **81** and residual brine **82** are then removed from evaporator **100**. Tubes **110** are the heat exchanger in evaporator **100**, and their heat transfer coefficient and susceptibility to scaling determine the overall efficiency of the MVC.

The MVC process is based on the application of the principle of a heat pump, which continuously recycles and keeps the latent heat exchanged in the evaporation-condensation process within the system, instead of using steam for effecting the evaporation as in MED systems. The evaporation-condensation process takes place in equipment similar to that used in the MED process. Tubes utilized in the evaporators in MED and MVC processes are usually made of aluminum alloys, which have high heat transfer coefficients required for the MED and MVC processes, allowing the evaporators to be as small as possible, i.e. the higher the heat transfer coefficients, the smaller the size of the evaporator.

Due to high temperatures at which the aluminum alloy tubes are used in the above systems and salt and contaminants in the water to be desalinated, the quality of these tube surfaces, which is in contact with the water, deteriorates in time as a result of corrosion and scale precipitation, reducing the heat transfer coefficients. When the corrosion and scaling reach certain predetermined levels, cleaning of the tubes is required. In particular, in MED and MVC systems, the tubes are normally cleaned when the reduction of their heat transfer coefficient reaches approximately 10% from its original value.

Prior art document FR2591504 describes elongated heat exchanger tubes. US 2010/089560 discloses corrugated sheet metal plates for heat transfer in air conditioners.

### BRIEF SUMMARY

One aspect of the invention provides an evaporator comprising a plurality of tubes arranged to support a vertical film of saline water, and to evaporate water from the vertical film by heat transfer from a condensate film of condensing vapor within the tubes, the tubes having a heat transfer coefficient h_{O} that deteriorates to a heat transfer coefficient hₘ as a result of scaling, wherein reaching hₘ requires cleaning the tubes from the scaling after a period T_{O}, the evaporator characterized in that the tubes comprise an outer coating having a heat transfer coefficient he larger than hₘ and smaller h_{O}, the outer coating selected to increase a cleaning period to T_{C} larger than T_{O}.

Another aspect of the invention provides an evaporator comprising a plurality of horizontal, vertically elongated tubes arranged to support a vertical film of saline water in order to evaporate water from the film by heat transfer from a condensing vapor within the tubes, characterized in that: the horizontal tubes are vertically and circumferentially corrugated in a specified outer profile comprising alternating outer ridges and grooves on an outer face of the tubes, the specified outer profile selected to thin the film on the outer ridges to enhance heat transfer therethrough and evaporation therefrom.

This, additional, and/or other aspects and/or advantages of the embodiments of the present invention are set forth in the detailed description that follows; possibly inferable from the detailed description; and/or learnable by practice of the embodiments of the present invention.

### BRIEF DESCRIPTION OF THE DRAWINGS

The present invention will be more readily understood from the detailed description of embodiments thereof in conjunction with the accompanying drawings of which:
**Figure 1A** is a schematic illustration of a prior art multi-effect evaporator with round tubes,
**Figure 1B** is a schematic illustration of a prior art mechanical vapor compression desalination apparatus (MVC) with round tubes,
**Figure 2** is a cross-sectional view of one example of a round heat transfer tube that can be used in MED (**Figure 1A**) and MVC (**Figure 1B**), according to some embodiments of the invention,
**Figure 3** is a cross-sectional view of a coated oval heat transfer tube used in MED and MVC, according to some embodiments of the invention,
**Figure 4** is an external perspective view of an oval corrugated heat transfer tube, according to some embodiments of the invention,
**Figures 5A-5D** are schematic illustrations of a corrugated and vertically elongated tube, according to some embodiments of the invention;
**Figures 6A**-**6I** are schematic illustrations of the corrugation form on the tubes and its production, according to some embodiments of the invention; and
**Figure 7** is a high level schematic flowchart illustrating a method of enhancing heat transfer across evaporator tubes, according to some embodiments of the invention.

### DETAILED DESCRIPTION

Prior to setting forth the detailed description, it may be helpful to set forth definitions of certain terms that will be used hereinafter.

The term "corrugate" as used herein in this application, is defined as a sequence of parallel and alternating ridges and grooves, or flutes. The ridges and grooves (or flutes) are on both sides of the corrugated surface. The direction of grooves or flutes **124** on tubes **110** may be vertical, or grooves **124** may be diagonal in respect to the faces of tube **110**. The term corrugated tubes is not to be taken as limiting the relative angle of the ridges and grooves in respect to the tubes' faces.

Before explaining at least one embodiment of the invention in detail, it is to be understood that the invention is not limited in its application to the details of construction and the arrangement of the components set forth in the following description or illustrated in the drawings. The invention is applicable to other embodiments or of being practiced or carried out in various ways. Also, it is to be understood that the phraseology and terminology employed herein is for the purpose of description and should not be regarded as limiting. When heat transfer elements such as heat transfer tubes **110** are made of a light metal or light metal alloy, their outer surfaces **114**, **116** (hereinafter: 'metal heat transfer surfaces) when put under the process conditions, undergo corrosion and/or scale precipitation.

After a certain period of time, the corrosion and scale precipitation reduce the heat transfer coefficients of the metal heat transfer surfaces, and if no cleaning thereof is performed (by cleaning treatment), the desalination rate can substantially decrease. Thus, in a desalination process, whether performed by MED, MVC, or by any other desalination system, where heat transfer tubes **110** are conventionally made of a light metal or light metal alloy. Tubes **110** have an original heat transfer coefficient ho at their metal heat transfer surface, and a minimal acceptable value hₘ of the heat transfer coefficient at which point cleaning of the metal heat transfer surface from corrosion and/or precipitated scale is performed. Under predetermined process conditions, it is normally known how long it will take the heat transfer coefficient to reach its minimal acceptable value and the system needs to undergo a cleaning treatment. These cleaning treatments require the system to be temporary terminated. Depending on the quality of water at different sites, it may take the system a different time To during which the above acceptable minimal value hₘ of the heat transfer coefficient is reached.

Often, the acceptable difference between the original and minimal values of the heat transfer coefficient (ho - hₘ) is no more than 10% from the original heat transfer coefficient ho.

**Figure 2** is a cross-sectional view of one example of round heat transfer tube **110** that can be used in MED (**Figure 1A**) and MVC (**Figure 1B**), according to some embodiments of the invention. Tube **110** comprises an outer surface **141** on which coating **140** is deposited, an inner surface **116**, and a tube wall **145**.

Coating **140** may be a ceramic protecting layer.

Heat transfer tube **110** may be made of a light metal or a light metal alloy, such as aluminum or magnesium alloys (e.g. 3XXX and 5XXX series aluminum alloys), and in a desalination process, outer surface **114** functions as the original (i.e. without coating **140**) tube outer heat transfer surface **141** (hereinafter: 'metal heat transfer surface').

Coating **140**, such as the ceramic protecting layer on metal outer heat transfer surface **141** may comprise, fully or partially, an oxide of the metal of which tube **110** is made, obtained by as oxidization treatment of the surface **141**.

Various processes may be used for forming coating **140** or the ceramic protecting layer. Examples of such processes are anodization and plasma electrolytic oxidation which is also known as micro arc oxidation (MAO), the latter being a more advanced process for producing higher quality coatings. Both of the aforementioned processes are electrochemical surface treatment processes for generating oxide coatings on metals, MAO is a process that employs higher potentials than anodizing and causes discharges to occur in the oxide layer that is being formed, wherein the resulting plasma modifies and enhances the structure of the oxide layer.

Alternatively, coating **140** can be deposited onto the surface, e.g. by the process of thermal spraying (e.g. plasma spraying) or by the process of electrodeposition (also known as electroplating). For example, coating **140** may be a deposited ceramic protecting layer **140** including zirconia and/or other oxides typically used to produce ceramic coating layers. Ceramic protecting layer **140** may be formed by a number of separate ceramic coating layers comprising different materials and having different properties. A combination of the aforementioned processes can also be used to produce ceramic protecting layer **140**.

With coating **140** as described above, outer surface **114** functions, in a desalination process, as a ceramic layer heat transfer surface (hereinafter: 'ceramic heat transfer surface').

Wall **145** of heat transfer tube **110** is of a thickness **132**, and coating **140** is of a thickness **142**, which is essentially less than thickness **132** of tube **110**. In particular, coating thickness **142** may be between 5% and 0.5% of wall thickness **132**.

For example, with tube **110** described above being made of aluminum alloy 5052, with thickness **132** of tube's wall **145** being in the range between 1 to 2 mm, ceramic protection layer **140** may have thickness **142** between 10 to 20 microns. Coating **140** may be formed e.g. by micro-arc oxidation and have a roughness average (i.e. surface finish) - Ra, in the approximate range of 0.5-2 microns.

Ceramic protecting layer **140** may be configured to ensure that the heat transfer coefficient of tube **110** at its ceramic heat transfer outer surface **114** has a value he that satisfies the condition hₘ < he < ho under the predetermined process conditions referred to above. As a result of the formation of ceramic protecting layer **140** described above, tube **110** has a lower rate of corrosion and/or scale precipitation than that it would have without ceramic protecting layer **140**, with metal surface **141** as outer surface **114**.

With ceramic protecting layer **140** as described above, the time Tc during which the heat transfer coefficient he reaches its minimal acceptable value hₘ is longer than T_{O} - the time tube **110** reaches hₘ without layer **140**. Hence, although coating **140** reduces the maximal (clean) heat transfer coefficient from ho (for metal heat transfer surface **141** without coating **140**) to he, it much more extends the duration between sequential cleaning of outer surface **114** from scale and corrosion from To to Tc, which both provides a higher average heat transfer coefficient during the operation period between sequential treatments (T_{C}) as well as reduces the frequency of necessary cleaning treatments which increases the overall desalination efficiency.

For example, instead of cleaning the desalination system once a year (To) which is a standard cleaning frequency for multi-effect systems, it can be cleaned once in two years (T_{C}).

**Figure 3** is a cross-sectional view of a coated oval heat transfer tube **110** useable in MED and MVC, according to some embodiments of the invention, and **Figure 4A** is a perspective view of an oval corrugated heat transfer tube **110**, according to some embodiments of the invention.

While **Figure 2** illustrates a round tube **110**, **Figure 3** illustrates an oval, or vertically elongated cross section of tube **110**, and **Figure 4** illustrates a vertically elongated cross section of tube **110** with vertical corrugations of outer surface **114**, that may be, but are not necessarily, coated with coating **140**, and further enhance heat transfer across tube **110**. Arrows mark the direction of water **90** that is sprayed onto surface **114** of tube **110**. A ceramic protecting layer **140** may be applied to at least a portion of surface **114** of tube **110**, which serve as heat transfer surfaces, in order to reduce the rate of corrosion and/or scale precipitation thereon.

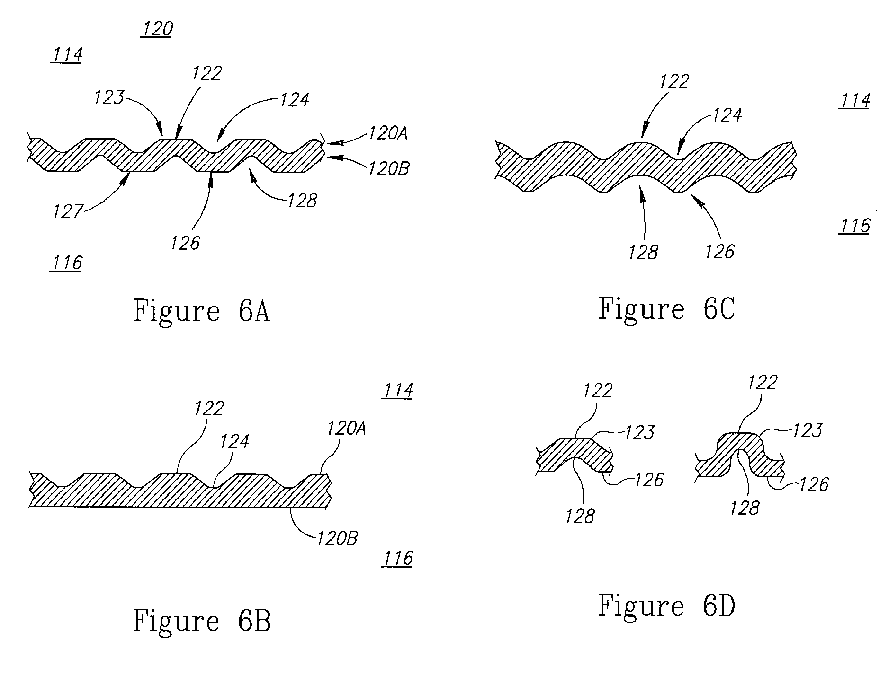

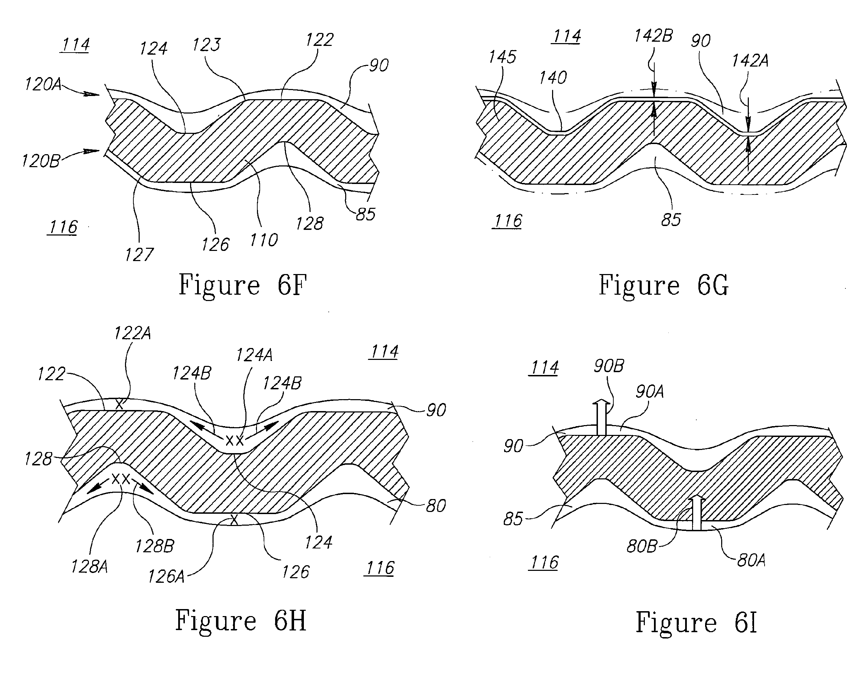

In the corrugated embodiments (**Figures 4**, **5D**, **6I****),** coating **140** may be deposited onto the corrugations, e.g. on outer surface **114** (possibly also on inner surface **116**). Coating thickness **142A**, **142B** may vary across the corrugations, e.g. vary between outer ridges **122** and outer grooves **124** of outer surface **114** (see **Figure 6I**)**.** Coating thicknesses **142A**, **142B** may be calculated to maximize heat transfer and maximize cleaning intervals at their operating conditions and in respect to water film flow as explained below (**Figures 6F-6H**).

The inventors submit that increasing overall heat transfer and heat transfer efficiency by coating heat transfer tubes **110** with ceramic coating **140** is a surprising result, as, in view of their extremely low thermal conductivity, such coatings have not been used on elements whose functioning required their high thermal conductivity, such as elements used in desalination processes. On the contrary, it was rather suggested to use the above coatings as thermal barrier layers (J.A. Curran and I.W. Clyne, The Thermal Conductivity of Plasma Electrolytic Oxide Coatings on Aluminum and Magnesium, Surface and Coatings Technology, Volume 199, Issues 2-3, 22 September 2005, Pages 177-183, Plasma Electrolysis).

The inventors of the subject matter of the present application have realized that, in spite of the reduced thermal conductivity, coating (protecting layer) **140** can be used on elements participating in a desalination process, to increase the time by which corrosion and/or scale precipitation on their metal heat transfer surface causes the heat transfer coefficient of said surface to reach its minimal acceptable value, if the coating is designed so that the changed heat transfer coefficient (he) is higher than the minimal acceptable heat transfer coefficient (hₘ), for a longer period of time than if there was no ceramic coating. Heat transfer elements or tubes **110** may have any desired cross-sectional shape, e.g. a circular or oval cross-sectional shape. Ceramic protecting layer **140** in elements **110** can be disposed on outer surface **141** of the tube wall, i.e., facing the exterior of tube **110**, and/or on an inner surface **116** of tube **110**. Heat transfer element/tube **110** can also be a heat exchanging plate, for example such as those used in the MVC evaporators.

Heat transfer surface **116** of heat transfer element/tube **110** may be grooved or smooth. When grooved tubes **110** are oval, they can be formed in such manner that the grooves are oriented about 90° to the longitudinal axis of tubes **110** (e.g. vertically when tubes **110** are horizontal). The heat transfer surface **116** or at least a portion thereof can also have a corrugated form. The grooves or corrugations increase the efficiency of the heat transfer.

Ceramic protecting layer **140** can comprise or be fully made of a light metal alloy oxide, such as an aluminum alloy or a magnesium alloy, in which case ceramic protecting layer **140** can comprise or be fully made of aluminum or magnesium oxide, respectively. Magnesium has the advantage of being lighter than aluminum, but is more sensitive to severe process conditions (such as high temperature, high solute concentration).

Heat transfer element/tube **110** can constitute a part of desalination or chemical solution concentration system or a system used in evaporators, in particular industrial evaporators.

**Figures 5A-5D** are schematic illustrations of a corrugated and vertically elongated tube **110**, according to some embodiments of the invention; and **Figures 6A-6I** are schematic illustrations of a corrugation form **120** on tubes **110** and its production[?], according to some embodiments of the invention.

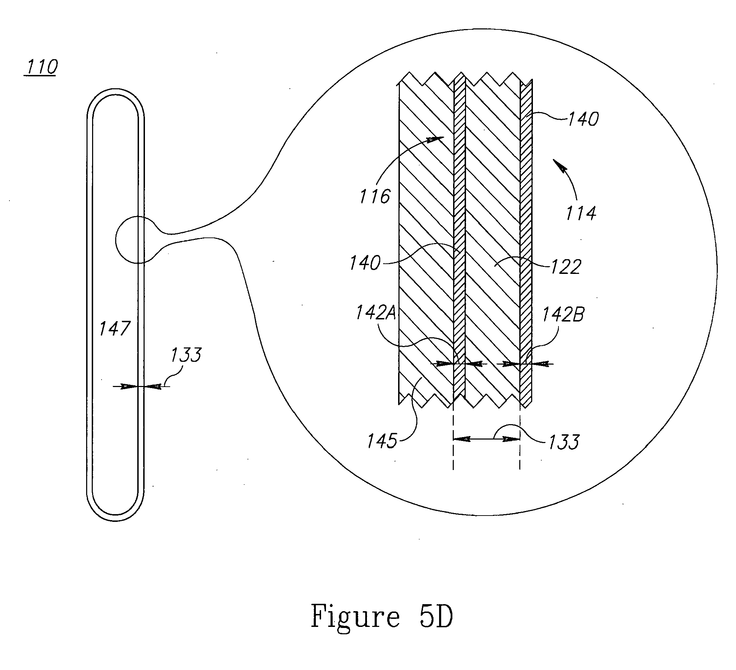

**Figure 5A** is a perspective view of tube **110** with film **90** illustrated on a part of tube **110**. Film **90** falls on all or most of the length of tube **110**, and is shown only on a part of tube **110** for clarity reasons. **Figure 5B** illustrates a transverse cross section of tube **110**, **Figure 5C** is a perspective view of a detail on the upper edge of tube **110** and **Figure 5D** illustrates coated corrugated tube **110**.

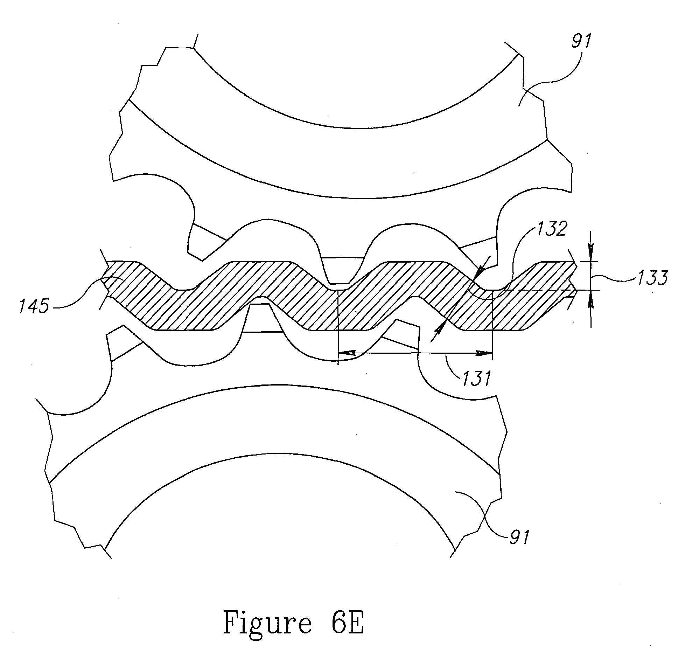

**Figures 6A-6D** illustrate a longitudinal cross section through tube **110**, presenting various corrugation forms or specified profile **120**, **Figure 6E** illustrates the cross section in an exemplary production method, and **Figures 6F-6I** illustrate film **90** and condensing vapor **85** on the longitudinal cross section, and further illustrate the functioning of the corrugated tube wall profile with and without coating **140**.

Multi effect evaporator **100** comprises effects **101**, each with a plurality of horizontal tubes **110** arranged to support a vertical film **90** of saline water, and to evaporate water from film **90** by heat transfer from condensing vapor within tubes **110**. Tubes **110** are vertically elongated to increase a contact area between tubes **110** and film **90**, and to better support and control the form and thickness of film **90**. The form of tubes **110** may be oval and may have vertical parallel sides **111A** connected rounded ends **111B.**

Tubes **110** have a vertical and circumferential (relating to a transverse cross section) corrugation **112** in a specified profile **120**. Corrugation form **120** may be selected according to various criteria, including, for example heat transfer coefficients, thickness and waviness of film **90** and of condensate film **85**, downwards flow speed of film **90** and of condensate film **85** in respect to a location on profile **120**. Corrugation **112** is arranged to enhance heat transfer from the vapor to film **90** and further enhances water evaporation by determining film characteristics.

**Figure 5D** presents an enlarged transverse cross section through the edge of corrugated and coated tube **110**. Outer ridges **122 and** outer grooves **124** (see below, **Figure 6A**) on outer face **114** of tubes **110** may be coated by coating **140** such as an oxide layer, that may have varying thickness on outer ridge **122** (thickness **142A**) and outer groove **124** (thickness **142B**). Thicknesses **142** of coating **140** are not to scale in **Figure 5D**.

Profile **120** comprises a specified outer profile **120A** and a specified inner profile **120B** (**Figures 6A**, **6F**) that are selected to control the flowing characteristics, such as thickness and waviness, of film **90** and of condensate film **85**, respectively, to enhance evaporation from an outer face **114** and condensation on an inner face **116** of tubes **110**.

Specified outer profile **120A** comprises outer ridges **122** and outer grooves **124** on outer face **114** of tubes **110**, specified inner profile **120B** comprises inner ridges **126** and inner grooves **128** on inner face **116**. Outer grooves **124** correspond to inner ridges **126** and inner grooves **128** correspond to outer ridges **122**. Outer profile **120A** enhances evaporation (from outer ridges **122**), while inner profile **120B** enhances condensation of vapor (in inner grooves **128**). Specified outer ridge profile **120A** may be congruent to specified inner ridge profile **120B**, such that profile **120** is rotationally symmetric. The congruence may result from a symmetric production method of the sheets that are used to manufacture tubes **110**. Corrugation **112** may be produced by two identical cogs **91** (**Figure 6E**), each arranged to produce a corresponding ridge profile **122**, **126**. Tubes **110** may be produced from planar corrugated sheets (see **Figure 6E**), e.g. by bending and welding them to tubes **110**. Tubes **110** may be produced in alternative ways, such as hydroforming, pressing, etc.

Specified outer ridge profile **120A** and specified inner ridge profile **120B** may be trapezoidal, with either straight or convex sides (**Figure 6B**).

Outer ridges **122** and inner ridges **126** may have flat tops which are angular **123**, **127** (respectively) on their sides. Alternatively, outer ridges **122** and inner ridges **126** may have convex tops which are angular **123**, **127** (respectively) on their sides. Angled outer ridges **123** are shaped to control film characteristics. For example, angle **123** may be selected to promote evaporation from film **90** by thinning or breaking film **90** and enhancing film instability, as illustrated in **Figure 6F**.

The form of tubes **110** influences film characteristics and may stretch and thin film **90** under operation of gravity, surface tension and flow forces (**Figures 6F-6I**). Outer ridges **122** may enhance the wavy character of falling film **90** on outer face **114** of tubes **110** and thereby enhance evaporation. Inner ridges **126** and inner grooves **128** may enhance the wavy character of falling condensate on inner face **116** of tubes **110** and thereby enhance condensation.

Corrugation **112** of both inner and outer faces **114**, **116** allows optimizing surface characteristics that maximize evaporation and condensation, and thus maximize the process efficiency. In particular, generating stronger waviness, internal turbulence vortices inside the films **90** and condensate film, and shear forces on film **90**.

The inventors have discovered, that corrugation **112** changes flow characteristics and improve heat transfer in some embodiments in the following manner (**Figures 6H**, **6I**). Downwards flow of film **90** (on outer face **114**) and/or condensate film **80** (on inner face **116**) has a larger volume and a lower speed in grooves **124**, **128** (flows **124A**, **128A**) than on ridges **122**, **126** (flows **122A**, **126A**), all designation respective to outer face **114** and inner face **116**. Due to the different flow speeds, the intermediate parts of the film flow with a horizontal component **124B**, **128B** that compensates the eater masses and generates waviness in films **90**, **85**, which enhances evaporation. As a result of surface tension forces, film **90**, **85** on ridges **122**, **126**, denoted in **Figure 6I** by **90A** and **80A**, are thinner and flow faster than without corrugation **112**, and their thinness improves heat transfer (denoted by **90B** and **80B** in **Figure 6I** respectively) from tube **110** across film **122A**, **126A**, and hence a stronger evaporation therefrom. Indeed in grooves **124**, **128** heat transfer becomes somewhat worse, but overall, due to the larger area of the areas with a thinner film, heat transfer improves. These effects of the corrugation are much more significant on outer face **114** as the amount of water in film **90** are much larger than in film **80** (as film **90** is feed water, while film **80** is condensate).

In embodiments, outer face **114** of tube **110** may be coated (**Figure 6G**), possibly in variable thickness **142A**, **142B** over profile **120**, to reduce scaling and increase overall average heat transfer coefficient and/or maintenance periods in respect to uncoated corrugated tubes **110**. Alternatively, profile **120** may comprise only an outer corrugation (**Figure 6B**) a wavy profile (**Figure 6C**), which may also provide some of the presented benefits.

In embodiments, the inventors have discovered the following profile characteristics to be most effective in some cases. in profile **120**, a horizontal distance between sequential grooves **131** is 3.2 times (±10%) a tube wall thickness **132**, and a depth of the grooves **133** is a fifth (±10%) of the horizontal distance between sequential grooves **131**. Tube wall thickness **132** may be between 0.7 and 1.6 mm. In embodiments, tube wall thickness **132** may be between 1 and 1.25 mm. Tubes **110** may be made of aluminum to enhance heat transfer properties. Parts or all of tubes **110** may be coated by anti-corrosion coating **140** such as a ceramic coating. Inner face **116** may also be coated by an anti-corrosion coating (not shown). Coating **140** may be deposited on tubes **110** before or after their production from the sheets, in the latter case to protect strained areas of tubes **110**. Thickness **142** of coating **140** may be between 10 to 20 microns with a roughness average between 0.5-2 microns. Coating **140** may be formed e.g. by micro-arc oxidation, anodization or other oxidative surface treatment methods.

The inventors have found, that overall in some embodiments, corrugated tubes **110** have a total heat transfer coefficient (evaporation and condensation) that is higher by a factor of 2.5 to 3.5 in respect to oval smooth tubes in the same hydraulic and thermodynamic conditions. Evaporator **100** may further comprise a surfactant unit arranged to add a surface active agent to the saline water to control film **90** thickness on tubes **110**. The surface active agent may enhance the waviness of film **90** and further enhance evaporation.

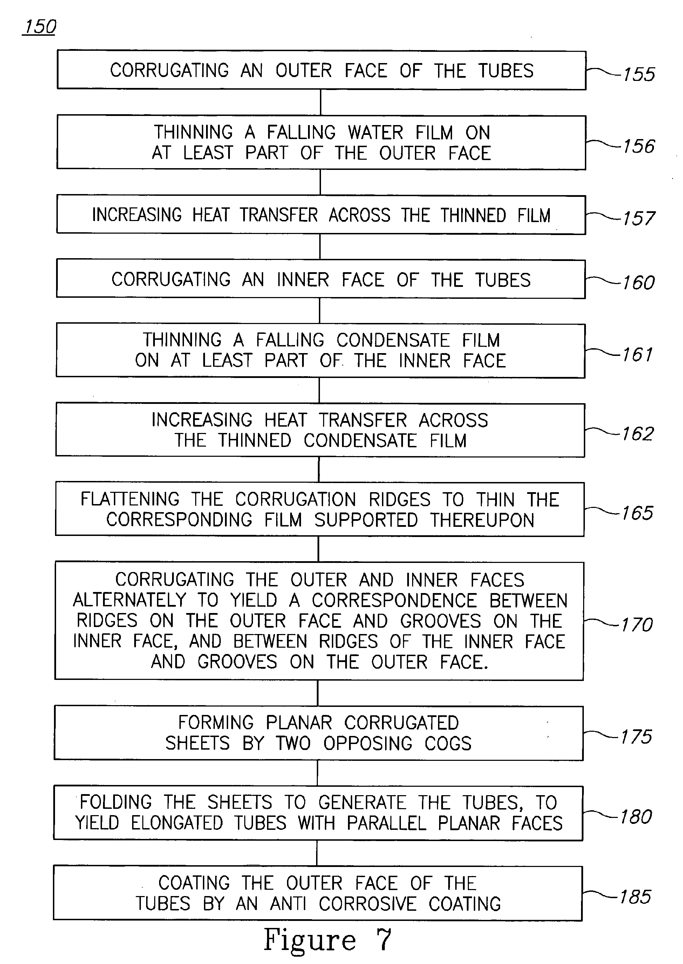

**Figure 7** is a high level schematic flowchart illustrating a method **150** of enhancing heat transfer across evaporator tubes, according to some embodiments of the invention. Method **150** comprises the following stages: corrugating (i.e. forming ridges and grooves) an outer face of the tubes (stage **155**) to thin a falling water film on at least part of the outer face (stage **156**), to increase heat transfer across the thinned film (stage **157**), and optionally corrugating an inner face of the tubes (stage **160**) to thin a falling condensate film on at least part of the inner face (stage **161**), to increase heat transfer across the thinned condensate film (stage **162**).

Method **150** may further comprise flattening the corrugation ridges (on either inner or outer faces, or both) to thin the corresponding film supported thereupon (stage **165**). The corrugated ridges may be fully or partly flattened (to become either flat or convex) to create angled ridge edges.

Corrugating of the outer face and of the inner face (stage **155** and **160** respectively) may be carried out alternately (stage **170**), to yield a correspondence between ridges on the outer face and grooves on the inner face, and between ridges of the inner face and grooves on the outer face.

For example, the alternate corrugation (stage **170**) may be carried out by two opposing cogs to form planar corrugated sheets (stage **175**), and method **150** may further comprise folding the sheets to generate the tubes, to yield elongated tubes with parallel planar faces (stage **180**). The tubes may be formed by any other production method, such as hydroforming, pressing, etc.

The inventors have found out, that heat transfer efficiency was maximized in one case, by corrugating the tubes (stages **155**, **160**, **170**) to yield a horizontal distance between sequential grooves that is 3.2 times (±10%) a tube wall thickness, and a depth of the grooves is a fifth (±10%) of the horizontal distance between sequential grooves.

Method **150** may further comprise coating the outer face of the tubes by an anti-corrosive coating (stage **185**), for example by oxidizing the outer surface of the tubes. The coating may have a heat transfer coefficient he that is smaller than the maximal heat transfer coefficient of the uncoated tubes ho and larger than the minimal acceptable heat transfer coefficient hₘ (which requires cleaning the tubes from scale to retain acceptable overall efficiency). The coating, though reducing the maximal heat transfer coefficient, lengthens the time between subsequent cleaning treatment, and so increases the overall efficiency of the evaporator. Coating (stage **185**) may be carried out after forming the tubes, and may be of variable thickness, especially when coated upon corrugated tubes. The coating may be carried out by any known method, such as electrolytic oxidation, micro arc oxidation, anodization, deposition, and so on.

## Claims

1. An evaporator (100) comprising a plurality of horizontal tubes (110), which are vertically elongated and arranged to support a vertical film (90) of saline water, and to evaporate water from the film by heat transfer from a condensate film of condensing vapor (85) within the tubes, **characterized in that**: the horizontal tubes (110) are vertically and circumferentially corrugated (112) in at least a specified outer profile (120A) comprising alternating outer ridges (122) and grooves (124) on an outer face (114) of the tubes, the specified outer profile selected to thin the film on the outer ridges to enhance heat transfer therethrough and evaporation therefrom.

2. The evaporator according to claim 1, wherein the horizontal tubes (110) are vertically and circumferentially corrugated in at least a specified inner profile (120B) comprising alternating inner ridges (126) and grooves (128) on an inner face of the tubes, the specified inner profile selected to thin the condensate film on the inner ridges to enhance heat transfer therethrough and condensation thereupon, or wherein the specified outer profile is congruent to the specified inner profile.

3. The evaporator according to claims 1 or 2, wherein at least one of: the outer profile (120A) and the inner profile (120B), is trapezoidal, or wherein at least one of: the outer ridges (122) and the inner ridges (126), is trapezoidal with convex sides, or, wherein at least one of: the outer ridges (122) and the inner ridges (126), has flat or convex tops which are angular on their sides, wherein the ridges are angled and shaped to control film characteristics.

4. The evaporator according to claim 3, wherein for both specified inner and outer profiles (120A, 120B): a horizontal distance between sequential grooves (128, 124) is 3.2 times (±10%) a tube wall thickness, and a depth of the grooves (128, 124) is a fifth (±10%) of the horizontal distance between sequential grooves.

5. The evaporator according to claim 4, wherein the tube wall thickness is between 0.7 and 1.6mm.

6. The evaporator according to claim 2, wherein the tubes (110) are produced from planar corrugated sheet, and/or wherein the tubes are oval, and/or wherein the tubes have vertical parallel sides and rounded ends.

7. The evaporator according to any of claims 1 to 6, wherein the tubes (110) are coated with an outer anticorrosion coating, the anti-corrosion coating being one of: ceramic, an oxide layer, or aluminum oxide generated by micro-arc oxidation on aluminum tubes and/or wherein a thickness of the outer coating is between 5% and 0.5% of a wall thickness of the tubes.

8. The evaporator according to claim 7, wherein the tubes (110) are made of at least one of: aluminum, magnesium, an aluminum alloy, and a magnesium alloy.

9. The evaporator according to any of claims 1 to 8, further comprising a surfactant unit arranged to add a surface active agent to the saline water to control the film thickness on the tubes.

10. A method of enhancing heat transfer across horizontal evaporator tubes (110) which are vertically elongated, the method comprising corrugating an outer face of the tubes in at least a specified outer profile (120A) comprising alternating outer ridges (122) and grooves (124) on an outer face of the tubes, to thin a falling water film (90) on at least part of the outer face, to increase heat transfer across the thinned film.

11. The method according to claim 10, further comprising corrugating an inner face (120B) of the tubes to thin a falling condensate film on at least part of the inner face, to increase heat transfer across the thinned condensate film, and/or further comprising flattening corrugation ridges to thin the corresponding film supported thereupon.

12. The method according to claim 11, wherein the corrugating of the outer face (120A) and of the inner face (120B) are carried out alternately, to yield a correspondence between ridges (122) on the outer face and grooves (128) on the inner face, and between ridges (126) of the inner face and grooves (124) on the outer face.

13. The method according to claim 12, wherein the corrugating is carried out by two opposing cogs to form planar corrugated sheets, and further comprising folding the sheets to generate the tubes (110), to yield elongated tubes with parallel planar faces.

14. The method according to claim 12, wherein the corrugations are selected to yield a horizontal distance between sequential grooves (124, 128) that is 3.2 times (±10%) a tube wall thickness, and a depth of the grooves is a fifth (±10%) of the horizontal distance between sequential grooves.

15. The method according to any of claims 10 to 14, further comprising coating (140) the outer face of the tubes by an anti-corrosive coating and/or wherein the coating is carried out by an oxidative treatment.

## Patentansprüche

1. Verdampfer (100), umfassend mehrere horizontale Rohre (110), die vertikal länglich sind und zum Tragen eines vertikalen Films (90) von salzhaltigem Wasser und zum Verdampfen von Wasser aus dem Film durch Wärmeübertragung von einem Kondensatfilm aus kondensierendem Dampf (85) innerhalb der Rohre angeordnet sind, **dadurch gekennzeichnet, dass**: die horizontalen Rohre (110) in wenigstens einem vorgegebenen Außenprofil (120A) vertikal und in Umfangsrichtung gewellt (112) sind, welches abwechselnde äußere Stege (122) und Rillen (124) an einer Außenfläche (114) der Rohre umfasst, wobei das vorgegebene Außenprofil zum Verdünnen des Films auf den äußeren Stegen gewählt ist, um die Wärmeübertragung da hindurch und die Verdampfung daraus zu verbessern.

2. Verdampfer nach Anspruch 1, wobei die horizontalen Rohre (110) in wenigstens einem vorgegebenen Innenprofil (120B) vertikal und in Umfangsrichtung gewellt sind, welches abwechselnde innere Stege (126) und Rillen (128) an einer Innenfläche der Rohre umfasst, wobei das vorgegebene Innenprofil zum Verdünnen des Kondensatfilms auf den inneren Stegen gewählt ist, um die Wärmeübertragung da hindurch und die Kondensation darauf zu verbessern, oder wobei das vorgegebene Außenprofil mit dem vorgegebenen Innenprofil übereinstimmt.

3. Verdampfer nach Anspruch 1 oder 2, wobei das Außenprofil (120A) und/oder das Innenprofil (120B) trapezförmig ist oder wobei die äußeren Stege (122) und/oder die inneren Stege (126) trapezförmig mit konvexen Seiten sind oder wobei die äußeren Stege (122) und/oder die inneren Stege (126) flache oder konvexe Oberseiten haben, die an ihren Seiten abgewinkelt sind, wobei die Stege zur Regulierung von Filmeigenschaften abgewinkelt und geformt sind.

4. Verdampfer nach Anspruch 3, wobei für beide, das vorgegebene Innen- und Außenprofil (120A, 120B): ein horizontaler Abstand zwischen aufeinanderfolgenden Rillen (128, 124) das 3,2-fache (±10 %) einer Rohrwanddicke ist und eine Tiefe der Rillen (128, 124) ein Fünftel (±10 %) des horizontalen Abstands zwischen aufeinanderfolgenden Rillen ist.

5. Verdampfer nach Anspruch 4, wobei die Rohrwanddicke zwischen 0,7 und 1,6 mm ist.

6. Verdampfer nach Anspruch 2, wobei die Rohre (110) aus ebenem Wellblech produziert sind und/oder wobei die Rohre oval sind und/oder wobei die Rohre vertikale parallele Seiten und abgerundete Enden haben.

7. Verdampfer nach einem der Ansprüche 1 bis 6, wobei die Rohre (110) mit einer äußeren Korrosionsschutzbeschichtung beschichtet sind, wobei die Korrosionsschutzbeschichtung eines der Folgenden ist: Keramik, eine Oxidschicht oder Aluminiumoxid, das durch Mikro-Lichtbogenoxidation auf Aluminiumrohren erzeugt wird, und/oder wobei eine Dicke der äußeren Beschichtung zwischen 5 % und 0,5 % einer Wanddicke der Rohre beträgt.

8. Verdampfer nach Anspruch 7, wobei die Rohre (110) aus wenigstens einem der Folgenden hergestellt sind: Aluminium, Magnesium, einer Aluminiumlegierungund und einer Magnesiumlegierung.

9. Verdampfer nach einem der Ansprüche 1 bis 8, der ferner eine Tensideinheit aufweist, die zum Hinzufügen eines oberflächenaktiven Stoffs zu dem salzhaltigen Wasser angeordnet ist, um die Filmdicke auf den Rohren zu regulieren.

10. Verfahren zur Verbesserung der Wärmeübertragung über horizontale Verdampferrohre (110), die vertikal länglich sind, wobei das Verfahren das Wellen einer Außenfläche der Rohre in wenigstens einem vorgegebenen Außenprofil (120A), welches abwechselnde äußere Stege (122) und Rillen (124) an einer Außenfläche der Rohre umfasst, zum Verdünnen eines fallenden Wasserfilms (90) auf wenigstens einem Teil der Außenfläche aufweist, um die Wärmeübertragung über den verdünnten Film zu erhöhen.

11. Verfahren nach Anspruch 10, das ferner das Wellen einer Innenfläche (120B) der Rohre zum Verdünnen eines fallenden Kondensatfilms auf wenigstens einem Teil der Innenfläche aufweist, um die Wärmeübertragung über den verdünnten Kondensatfilm zu erhöhen, und/oder ferner das Abflachen von Wellungsstegen zum Verdünnen des darauf getragenen entsprechenden Films aufweist.

12. Verfahren nach Anspruch 11, wobei das Wellen der Außenfläche (120A) und der Innenfläche (120B) abwechselnd durchgeführt werden, um eine Übereinstimmung zwischen Stegen (122) an der Außenfläche und Rillen (128) an der Innenfläche und zwischen Stegen (126) der Innenfläche und Rillen (124) an der Außenfläche zu ergeben.

13. Verfahren nach Anspruch 12, wobei die Wellung von zwei einander gegenüberliegenden Zahnrädern durchgeführt wird, um ebene Wellbleche zu bilden, wird und das ferner das Falten der Bleche zum Erzeugen der Rohre (110) aufweist, um längliche Rohre mit parallelen ebenen Seitenflächen zu ergeben.

14. Verfahren nach Anspruch 12, wobei die Wellungen gewählt werden, um einen horizontalen Abstand zwischen aufeinanderfolgenden Rillen (124, 128) zu ergeben, der das 3,2-fache (±10 %) einer Rohrwanddicke ist, und eine Tiefe der Rillen ein Fünftel (±10 %) des horizontalen Abstands zwischen aufeinanderfolgenden Rillen ist.

15. Verfahren nach einem der Ansprüche 10 bis 14, das ferner das Beschichten (140) der Außenfläche der Rohre mit einer Korrosionsschutzbeschichtung aufweist und/oder wobei die Beschichtung durch eine oxidative Behandlung durchgeführt wird.

## Revendications

1. Évaporateur (100) comprenant une pluralité de tubes horizontaux (110), qui sont allongés dans le plan vertical et agencés de façon à soutenir une pellicule verticale (90) d'eau saline, et destinés à faire évaporer l'eau de la pellicule grâce à un transfert thermique provenant d'une pellicule de condensat de la vapeur de condensation (85) à l'intérieur des tubes, **caractérisé en ce que** : les tubes horizontaux (110) sont ondulés (112) dans le plan vertical et circonférentiel suivant au moins un profil externe spécifié (120A) comportant des arêtes externes (122) et des rainures (124) en alternance sur une face externe (114) des tubes, le profil externe spécifié étant sélectionné afin d'amincir la pellicule sur les arêtes externes pour améliorer le transfert thermique à travers celles-ci et l'évaporation à partir de celles-ci.

2. Évaporateur selon la revendication 1, les tubes horizontaux (110) étant ondulés dans le plan vertical et circonférentiel suivant au moins un profil interne spécifié (120B) comportant des arêtes internes (126) et des rainures (128) en alternance sur une face interne des tubes, le profil interne spécifié étant sélectionné afin d'amincir la pellicule de condensat sur les arêtes internes pour améliorer le transfert thermique à travers celles-ci et la condensation sur celles-ci, ou le profil externe spécifié étant congruent au profil interne spécifié.

3. Évaporateur selon les revendications 1 ou 2, au moins l'un des postes suivants : soit le profil externe (120A) soit le profil interne (120B), étant trapézoïdal, ou au moins l'un des postes suivants : soit les arêtes externes (122) soit les arêtes internes (126), étant trapézoïdal avec des côtés convexes, ou au moins l'un des postes suivants : soit les arêtes externes (122) soit les arêtes internes (126) ayant des sommets plats ou convexes qui sont angulaires sur leurs côtés, alors que les arêtes sont inclinées en angle et façonnées pour commander les caractéristiques de pellicule.

4. Évaporateur selon la revendication 3, pour les deux profils interne et externe spécifiés (120A, 120B) : une distance horizontale entre des rainures séquentielles (128, 124) représentant 3,2 fois (±10 %) l'épaisseur de paroi d'un tube, et une profondeur des rainures (128, 124) représentant un cinquième (±10 %) de la distance horizontale entre des rainures séquentielles.

5. Évaporateur selon la revendication 4, l'épaisseur de paroi de tube se situant entre 0,7 et 1,6 mm.

6. Évaporateur selon la revendication 2, les tubes (110) étant produits à partir d'une feuille ondulée plane, et/ou les tubes étant ovales, et/ou les tubes possédant des côtés parallèles verticaux et des extrémités arrondies.

7. Évaporateur selon l'une quelconque des revendications 1 à 6, les tubes (110) étant revêtus d'un revêtement anticorrosion externe, le revêtement anticorrosion étant l'un des matériaux suivants : céramique, une couche d'oxyde, ou oxyde d'aluminium généré par une oxydation par micro-arc sur des tubes en aluminium, et/ou une épaisseur du revêtement externe représentant entre 5 % et 0,5 % d'une épaisseur de paroi des tubes.

8. Évaporateur selon la revendication 7, les tubes (110) étant réalisés en au moins un des matériaux suivants : aluminium, magnésium, un alliage d'aluminium et un alliage de magnésium.

9. Évaporateur selon l'une quelconque des revendications 1 à 8, comprenant en outre une unité à surfactants agencée de façon à ajouter un agent tensio-actif à l'eau saline afin de piloter l'épaisseur de pellicule sur les tubes.

10. Procédé d'amélioration du transfert thermique à travers des tubes d'évaporateur horizontaux (110) qui sont allongés dans le plan vertical, le procédé comprenant l'opération consistant à onduler une face externe des tubes suivant au moins un profil externe spécifié (120A) comportant des arêtes externes (122) et des rainures (124) en alternance sur une face externe des tubes afin d'amincir une pellicule d'eau en chute (90) sur au moins une partie de la face externe, pour accroître le transfert thermique à travers la pellicule amincie.

11. Procédé selon la revendication 10, comprenant en outre l'opération consistant à onduler une face interne (120B) des tubes afin d'amincir une pellicule de condensat en chute sur au moins une partie de la face interne, pour accroître le transfert thermique à travers la pellicule de condensat amincie, et/ou comprenant en outre l'opération consistant à aplanir des arêtes d'ondulation afin d'amincir la pellicule correspondante soutenue sur celles-ci.

12. Procédé selon la revendication 11, l'ondulation de la face externe (120A) et de la face interne (120B) étant réalisée en alternance, afin d'obtenir une correspondance entre des arêtes (122) sur la face externe et des rainures (128) sur la face interne, et entre des arêtes (126) de la face interne et des rainures (124) sur la face externe.

13. Procédé selon la revendication 12, l'ondulation étant réalisée par deux pignons opposés afin de former des feuilles ondulées planes, et comprenant en outre l'opération consistant à plier les feuilles afin de générer les tubes (110), pour obtenir des tubes allongés avec des faces planes parallèles.

14. Procédé selon la revendication 12, les ondulations étant sélectionnées pour procurer une distance horizontale entre des rainures séquentielles (124, 128) laquelle représente 3,2 fois (±10 %) l'épaisseur de paroi d'un tube, et une profondeur des rainures représentant un cinquième (±10 %) de la distance horizontale entre des rainures séquentielles.

15. Procédé selon l'une quelconque des revendications 10 à 14, comprenant en outre l'opération consistant à revêtir (140) la face externe des tubes d'un revêtement anticorrosif et/ou cas dans lequel l'opération de revêtement est réalisée grâce à un traitement d'oxydation.
